# EUROPEAN PATENT SPECIFICATION

(11) **EP 3 790 329 B1**
(45) Date of publication and mention of the grant of the patent: **29.06.2022**
(21) Application number: 18917445.1
(22) Date of filing: 04.05.2018
(51) Int. Cl.: H04L 5/00, H04W 48/12, H04W 72/04, H04W 36/06, H04W 36/36

(54) **METHOD FOR UPDATING SYSTEM INFORMATION, TERMINAL DEVICE, AND WIRELESS COMMUNICATION SYSTEM**
VERFAHREN ZUR AKTUALISIERUNG VON SYSTEMINFORMATIONEN, ENDGERÄTEVORRICHTUNG UND DRAHTLOSKOMMUNIKATIONSSYSTEM
PROCÉDÉ DE MISE À JOUR D'INFORMATIONS SYSTÈME, DISPOSITIF TERMINAL ET SYSTÈME DE COMMUNICATION SANS FIL

(43) Date of publication of application: 10.03.2021
(73) Proprietor: GUANGDONG OPPO MOBILE TELECOMMUNICATIONS CORP., LTD., Wusha, Chang'an Dongguan Guangdong 523860 (CN)
(72) Inventor: YANG, Ning, Dongguan, Guangdong 523860 (CN); SHI, Cong, Dongguan, Guangdong 523860 (CN); YOU, Xin, Dongguan, Guangdong 523860 (CN)
(74) Representative: Manitz Finsterwald Patent- und Rechtsanwaltspartnerschaft mbB
(86) International application number: PCT/CN2018/085715
(87) International publication number: WO 2019/210521

(56) References cited:
- EP-A1- 3 739 950
- WO-A1-2019/157896
- CN-A- 102 065 496
- CN-A- 102 291 801
- CN-A- 107 911 203
- US-A1- 2018 048 413
- QUALCOMM INCORPORATED: "System information acquisition in RRC CONNECTED over BWP", 3GPP DRAFT; R2-1803683 SYSTEM INFORMATION ACQUISITION OVER BWP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 16 February 2018 (2018-02-16), XP051400706, Retrieved from the Internet: URL:http://www.3gpp.org/ftp/tsg%5Fran/WG2% 5FRL2/TSGR2%5F101/Docs/ [retrieved on 2018-02-16]
- MEDIATEK INC: "Remaining Details on Bandwidth Part Operation in NR", 3GPP DRAFT; R1-1804049_REMAINING DETAILS ON BANDWIDTH PART OPERATION IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Sanya, China; 20180416 - 20180420 15 April 2018 (2018-04-15), XP051426338, Retrieved from the Internet: URL:http://www.3gpp.org/ftp/Meetings%5F3GP P%5FSYNC/RAN1/Docs/ [retrieved on 2018-04-15]
- HUAWEI ET AL: "MIB Reception for Connected UEs in BWP", 3GPP DRAFT; R2-1804426 MIB RECEPTION FOR CONNECTED UES IN BWP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Sanya, China; 20180416 - 20180420 14 April 2018 (2018-04-14), XP051428164, Retrieved from the Internet: URL:http://www.3gpp.org/ftp/Meetings%5F3GP P%5FSYNC/RAN2/Docs/ [retrieved on 2018-04-14]
- SAMSUNG: "Updated SI Reception in RRC Connected: BWP Aspects", 3GPP DRAFT; R2-1804313_UPDATED SI RECEPTION IN RRC CONNECTED_BANDWIDTH PART ASPECTS, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Sanya, China; 20180416 - 20180420 14 April 2018 (2018-04-14), XP051428063, Retrieved from the Internet: URL:http://www.3gpp.org/ftp/Meetings%5F3GP P%5FSYNC/RAN2/Docs/ [retrieved on 2018-04-14]
- ERICSSON: "Notification and retrieval of updated SI for a UE in an active DL BWP", 3GPP DRAFT; R2-1800294 - NOTIFICATION AND RETRIEVAL OF UPDATED SI FOR A UE IN AN ACTIVE DL BWP, 3RD GENERATION PARTNERSHIP PROJECT (3GPP), MOBILE COMPETENCE CENTRE ; 650, ROUTE DES LUCIOLES ; F-06921 , vol. RAN WG2, no. Vancouver, Canada; 20180122 - 20180126 12 January 2018 (2018-01-12), XP051386131, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]

## Description

### TECHNICAL FIELD

Embodiments of the present application relate to the field of communications, and in particularly, to a system information updating method, a wireless communication system, and a terminal device.

### BACKGROUND

In a new radio (NR) system, the terminal device may activate one or more bandwidth parts (BWP) after entering the connected state. At the same time, the BWP may or may not include system information. When the system information changes, the terminal device may obtain the latest system information through the currently resident BWP. If there is no system information in the currently resident BWP, the network device may send the updated system information to the terminal device through dedicated signaling. However, when the system information changes, the terminal device needs a certain amount of time to read the updated system information sent by broadcasting. During this process, if the network device instructs the terminal device to switch BWP (e.g., switch from BWP1 to BWP2), the terminal device cannot know how to receive the updated system information.

EP 3 739 950 A1 is relevant under Article 54(3) EPC and discloses methods and apparatuses for transmitting and acquiring system information and a communication system. The apparatus for transmitting system information includes: a first transmitting unit configured to transmit a paging message on a first bandwidth part (BWP), the paging message comprising indication information indicating a system information modification; and a second transmitting unit configured to transmit updated system information on a second BWP; wherein, the first BWP is different from the second BWP. Hence, the paging message and updated system information are transmitted on different BWPs, thereby saving signaling overhead of the system for transmitting the updated system information.

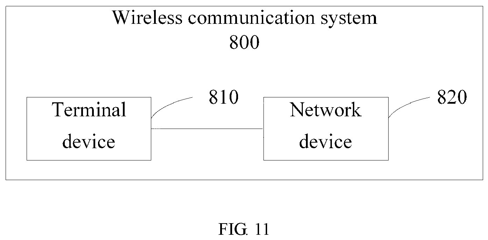

WO 2019/157896A1 is relevant under Article 54(3) EPC and discloses that the network (e.g., a base station of the network) may configure an initial DL BWP as one of the configured BWPs for a UE. The network may then page the UE on the active DL BWP of the UE (e.g., as in block 1104 of FIG. 11) when the network updates system information. The UE may then autonomously switch a receiver of the UE to the initial DL BWP (e.g., as in block 1204 of FIG. 12) in order to receive SI via the initial DL BWP (e.g., as in block 1206 of FIG. 12). The UE may then switch back to a previous active BWP (e.g., as in block 1208 of FIG. 12) after the UE has finished

3GPP DRAFT R2-1803683 discloses that at least in following 2 scenarios, SI should be broadcast in initial BWP when UE in CONNECTED. Scenario 1: UE fallback to initial BWP when BWP inactivity timer expires and default BWP is not configured. Scenario 2: UE fallback to initial BWP for RACH when active BWP has no RACH resources.

3GPP DRAFT R2-1804049 discloses that paging control for system information update or emergency services includes 1 bit indicating whether there is SI broadcast in an UE's active DL DWP. If yes, the UE receives the SI broadcast in its active DL DWP. If no, the UE switches its active DL DWP to the initial active DL DWP to receive the SI broadcast and stays in the initial active DL BWP until receiving a DCI indicating active DL BWP switching.

3GPP DRAFT R2-1804426 discloses that for MIB broadcast, upon paging for SI change notification, the UE can read MIB directly from the cell defining SS/PBCH block if its current active DL BWP overlaps with the UE's cell defined SSB; otherwise, the UE should read MIB during measurement gaps without BWP switch.

3GPP DRAFT R2-1804313 discloses that if CSSs for SI (i.e. RMSI, OSI) is configured in UE's active DL BWP, RRC CONNECTED UE acquires the updated SI from within the UE's active DL BWP. If CSSs for SI (i.e. RMSI, OSI) is not configured in UE's active DL BWP, network can provide the updated SI to UE in dedicated signaling.

3GPP DRAFT R2-1800294 discusses how to notify an RRC_CONNECTED state UE with a configured active DL BWP that SI will be updated (or that ETWS/CMAS information has been activated) and how to facilitate for the UE to retrieve the updated SI or ETWS/CMAS information.

### SUMMARY

The present application is set out in the appended set of claims. Embodiments of the present application provide a system information updating method, a terminal device, and a wireless communication system.

The terminal device can normally receive the updated system information during a BWP switch triggered by the terminal device, thereby ensuring that the terminal device can also update the system information during the BWP switch.

In a first aspect, a system information updating method is according to claim 1.

In a second aspect a wireless communication system is provided according to claim 8.

In a third aspect, a terminal device is provided according to claim 14.
FIG. 1 is a schematic diagram of an application scenario of the present application.
FIG. 2 is a schematic diagram of BWP activation by RRC signaling according to the present application.
FIG. 3 is a schematic diagram of BWP activation by DCI signaling according to the present application.
FIG. 4 is a schematic diagram of a BWP according to the present application.
FIG. 5 is a schematic flowchart of a system information updating method according to the present application.
FIG. 6 is a schematic flowchart of a system information updating method according to the present application.
FIG. 7 is a schematic block diagram of a terminal device according to the present application.
FIG. 8 is a schematic block diagram of a network device according to the present application.
FIG. 9 is a schematic block diagram of a communication device according to the present application.
FIG. 10 is a schematic block diagram of a chip according to the present application.
FIG. 11 is a schematic block diagram of a wireless communication system according to the present application.

### DESCRIPTION OF EMBODIMENTS

The technical solutions in the present application will be described below with reference to the accompanying drawings in the present application.

Embodiments of the present application can be applied to various communication systems, for example: a global system of mobile communication (GSM) system, a code division multiple access (CDMA) system, and a wideband code division multiple access (WCDMA) system, a general packet radio service (GPRS), a long term evolution (LTE) system, an advanced long term evolution (LTE-A) system, an NR system, an evolutionary system of NR system, a LTE-based access to unlicensed spectrum (LTE-U) system, an NR-based access to unlicensed spectrum (NR-U) system, a universal mobile telecommunication system (UMTS), wireless local area networks (WLAN), wireless fidelity (WiFi), next-generation communication systems or other communication systems, etc.

In general, traditional communication systems support a limited number of connections and are easy to implement. However, with the development of communication technologies, mobile communication systems will not only support traditional communication, but also support, for example, device to device (D2D) communication, machine to machine (M2M) communication, machine type communication (MTC), and vehicle to vehicle (V2V) communication, etc. Embodiments of the present application may also be applied to these communication systems.

Optionally, the communication system in embodiments of the present application may be applied to a scenario of carrier aggregation (CA), a scenario of dual connectivity (DC), or a scenario of standalone (SA) web configuration.

Embodiments of the present application do not limit the applied frequency spectrum. For example, embodiments of the present application may be applied to licensed spectrum or unlicensed spectrum.

Embodiments of the present application describe various embodiments in combination with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user device, etc. The terminal device may be a station (ST) in the WLAN, may be a cellular phone, a cordless phone, a session initiation protocol (SIP) phone, a wireless local loop (WLL) station, a personal digital assistant (PDA) device, a handheld device with wireless communication capabilities, a computing device, or other processing devices connected to wireless modems, an in-vehicle device, a wearable device, and next-generation communication systems, such as the terminal device in NR networks or the terminal device in the public land mobile network (PLMN) that will evolve in the future.

As an example and not a limitation, in embodiments of the present application, the terminal device may also be a wearable device. Wearable devices can also be referred to as wearable smart devices, which are the general term for wearable devices developed by applying wearable technology to daily wearable intelligent design, such as glasses, gloves, watches, clothes, and shoes. A wearable device is a portable device that is worn directly on the body or integrated into the user's clothes or accessories. A wearable device is not only a hardware device, but also realizing powerful functions through software support, data interaction, and cloud interaction. Generalized wearable smart devices include devices of full-featured, large-sized, complete or partial functions that do not depend on smartphones, such as: smart watches or smart glasses, and devices only focus on a certain type of application functions, and need to cooperate with other devices such as smartphones to use, such as various smart bracelets and smart jewelry for signs monitoring.

The network device may be a device for communicating with a mobile device, and the network device may be an access point (AP) in WLAN, a base transceiver station (BTS) in GSM or CDMA, or a WCDMA NodeB (NB), may also be an evolutional Node B (eNB or eNodeB) in LTE, or a relay station or access point, or a vehicle-mounted device, a wearable device, and a network device (gNB) in an NR network or a network device in the PLMN network that might evolve in the future.

In embodiments of the present application, the network device provides services for the cell, and the terminal device communicates with the network device through the transmission resources (e.g. frequency domain resources, or spectrum resources) used by the cell. The cell may be a cell corresponding to the network device (e.g. the base station) and may belong to a macro base station or a base station corresponding to a small cell. The small cell herein may include: a metro cell, a micro cell, and a pico cell, a femto cell, etc. These small cells have the characteristics of small coverage and low transmission power, and are suitable for providing high-speed data transmission services.

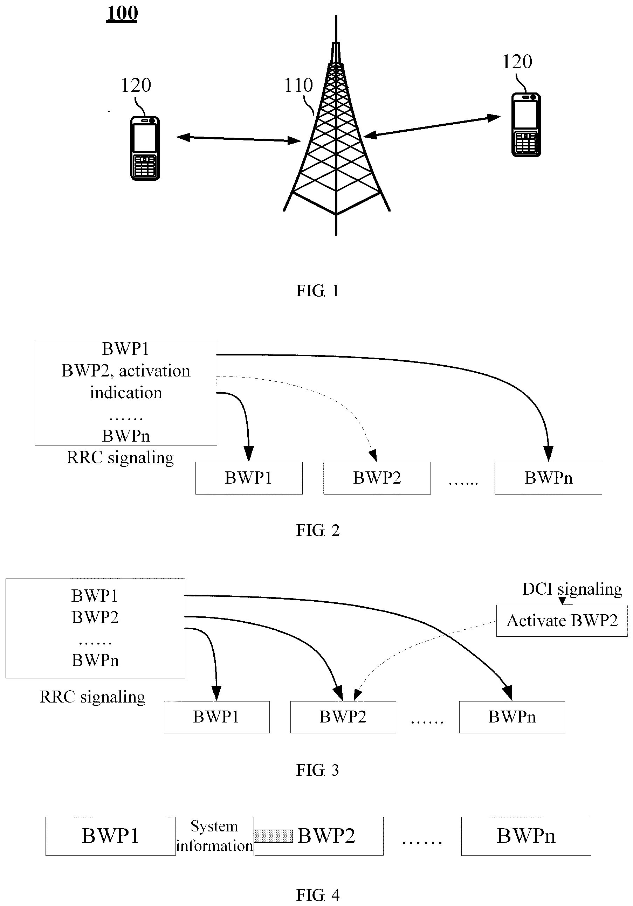

FIG. 1 exemplarily illustrates one network device 110 and two terminal devices 120. Optionally, the wireless communication system 100 may include multiple network devices and there may be other numbers of terminal devices within the coverage area of each network device, which there is no limitation in embodiments of the present application.

Optionally, the wireless communication system 100 may further include other network entities such as a mobility management entity (Mobility Management Entity, MME), an access and mobility management function (Access and Mobility Management Function, AMF), etc., which there is no limitation in embodiments of the present application.

It should be understood that, in examples of the present application, after entering the connected state, the terminal device will activate one or more BWPs. The activation method may be the RRC signaling activation method as shown in FIG. 2 or may be the DCI signaling activation method as shown in FIG. 3.

Specifically, the RRC signaling activation method may be: while configuring/reconfiguring the BWP through RRC signaling, the network device may indicate which BWP or which BWPs to be activated through the indication information. For example, as shown in FIG. 2, the RRC signaling configures/reconfigures BWP1, BWP2, ..., BWPn, meanwhile, the RRC signaling indicates to activate BWP2, where n is a positive integer.

Specifically, the DCI signaling activation method may include: while configuring/reconfiguring the BWP through RRC signaling, the network device may indicate which BWP or which BWPs to be activated through the DCI signaling. For example, as shown in FIG. 3, the RRC signaling configures/reconfigures BWP1, BWP2, ..., BWPn, meanwhile, the DCI signaling indicates to activate BWP2, where n is a positive integer.

It should be understood that, in examples of the present application, the BWP may include system information or may not include system information. For example, as shown in FIG. 4, in BWP1, BWP2, ..., BWPn, BWP2 includes system information, where n is a positive integer.

Furthermore, various aspects or features of the present application may be implemented as methods, devices, or products using standard programming and/or engineering techniques. The term "products" used in the present application encompasses a computer program accessible from any computer-readable device, carrier, or medium. For example, computer-readable media may include, but is not limited to: magnetic storage devices (e.g., hard disks, floppy disks, or magnetic tapes, etc.), optical disks (e.g., compact discs (CD), digital versatile discs (DVD) etc.), smart cards and flash memory devices (e.g., erasable programmable read-only memory (EPROM), cards, sticks or key drives, etc.). Furthermore, the various storage media described herein may represent one or more devices and/or other machine-readable media for storing information. The term "machine-readable media" may include, but is not limited to, various media capable of storing, containing, and/or carrying instructions and/or data.

It should be understood that the terms "system" and "network" are often used interchangeably herein. The term "and/or" herein is merely an association that describes associated objects, indicating that there may be three relationships. For example, A and/or B, which may mean: three cases of that A existing alone, A and B existing at the same time, B existing alone. Furthermore, the character "/" herein generally indicates that the related former and latter objects are in an "or" relationship.

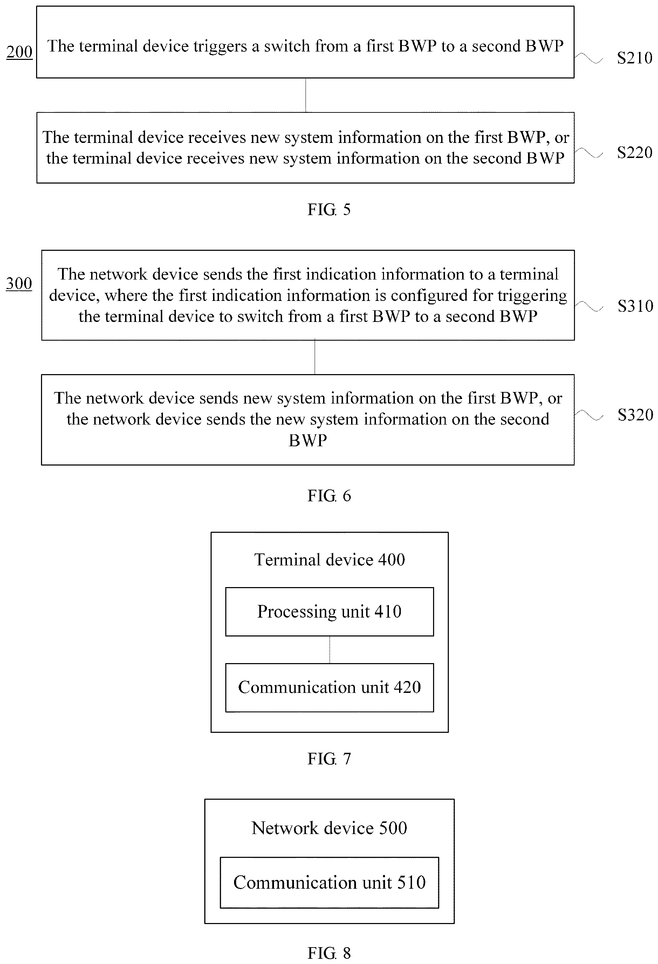

The system information updating method according to the present application will be described below with reference to FIGS. 5 to 6, and it should be understood that FIGS. 5 to 6 are schematic flowcharts of a system information updating method according to embodiments of the present application, illustrating detailed communication steps or operations of the method, but these steps or operations are merely examples, and other operations or variations of various operations in FIGS. 5 to 6 may be performed in the present application, that is, there is no limitation of the orders of the steps in FIGS. 5 to 6 in the present application.

Furthermore, the steps in FIGS. 5 to 6 may be performed in a different order than that illustrated in FIGS. 5 to 6, and it may not be necessary to perform all the operations in FIGS. 5 to 6.

FIG. 5 is a schematic flowchart of system information updating 200 according to present application. The method 200 may be applied to the system shown in FIG. 1, but is not limited thereto. The method 200 includes at least part of the following content.

S210: The terminal device triggers a switch from a first BWP to a second BWP.

It should be understood that the terminal device currently resides on the first BWP. It is also be understood that the first BWP is currently in an activated state.

Optionally, the terminal device may trigger the switch from the first BWP to the second BWP in the following manner.

Manner 1: If an inactivity timer for the first BWP (BWP inactivity timer) expires, the terminal device triggers the switch from the first BWP to the second BWP.

It should be noted that the inactivity timer may be directed to the first BWP only, or may be directed to multiple BWPs including the first BWP at the same time.

Manner 2: The terminal device receives the first indication information sent by the network device, and the first indication information is configured for indicating the terminal device to switch from the first BWP to the second BWP;
the terminal device triggers the switch from the first BWP to the second BWP according to the first indication information.

Optionally, the first indication information is RRC signaling or downlink control information.

Optionally, before the terminal device triggers the switch from the first BWP to the second BWP, the method further includes:
the terminal device receives the second indication information sent by the network device on the first BWP, and the second indication information is configured for indicating the terminal device to update system information.

Optionally, the second indication information is paging information (paging) or downlink control information.

S220: The terminal device receives the new system information on the first BWP, or the terminal device receives the system information on the second BWP.

It should be noted that, if the terminal device receives the new system information on the first BWP, the terminal device performs BWP switch after the new system information is received. If the terminal device receives the new system information on the second BWP, the terminal device receives the new system information after the BWP is switched.

The new system information in embodiments of the present application may include MIB, RMSI, and other system information blocks. It should be understood that RMSI may also be referred to as SIB1.

Optionally, after the new system information is received on the first BWP, the terminal device switches from the first BWP to the second BWP.

Specifically, the terminal device receives the new system information on the first BWP under the following cases.

Case 1: The terminal device directly receives the new system information on the first BWP, and after the new system information is received on the first BWP, switches from the first BWP to the second BWP.

Case 2: If the inactivity timer for the first BWP expires when the terminal device is receiving the new system information, the terminal device starts or restarts the inactivity timer, and receives the new system information on the first BWP.

Specifically, the terminal device may receive the new system information on the second BWP under the following cases.

Case 1: if there is no system information on the second BWP after the terminal device switches from the first BWP to the second BWP, the terminal device automatically switches from the second BWP to a third BWP with system information, and receiving the new system information on the third BWP.

Optionally, the third BWP is the first BWP or the initial BWP.

It should be noted that, in Case 1, after switching to the second BWP, the terminal device first attempts to receive the new system information on the second BWP, however, the second BWP does not have system information. At this time, the terminal device automatically switches from the second BWP to a third BWP with system information, and receives the new system information on the third BWP.

Case 2: The terminal device receives the new system information sent by the network device through dedicated signaling or a broadcast message on the second BWP.

It should be noted that, in Case 2, the second BWP may or may not have system information. At this time, the terminal device only needs to receive the new system information sent by the network device through the dedicated signaling or the broadcast message on the second BWP.

Optionally, in Case 2, before the terminal device receives the new system information sent by the network device through the dedicated signaling or the broadcast message on the second BWP, the terminal device sends the first information to the network device, where the first information indicates that the terminal device does not have the new system information, or indicates that the terminal device does not have the complete new system information.

That is to say, the network device may actively send the new system information on the second BWP through the dedicated signaling or the broadcast message, or it may only send the new system information on the second BWP through the dedicated signaling or the broadcast message after the terminal device requests (i.e., after the terminal device sends the first information).

Optionally, in Case 2, before the terminal device switches to the second BWP according to the first indication information, the terminal device sends the first information to the network device; or
after the terminal device switches to the second BWP according to the first indication information, the terminal device sends the first information to the network device.

Optionally, the first information is one of RRC signaling, MAC CE, and PUCCH signaling.

Case 3: after the terminal device switches from the first BWP to the second BWP, if there is no system information on the second BWP, the terminal device performs re-establishment to a fourth BWP with system information, and receives the new system information on the fourth BWP.

Optionally, in Case 3, if the new system information is essential system information (Essential SI), the terminal device performs re-establishment to the fourth BWP.

It should be noted that if the Essential SI is missing, the terminal device in the connected state cannot continue to maintain the access statum (AS) connection and/or bear configuration, and the terminal device may trigger a radio link failure (RLF) to perform re-establishment to the BWP with the cell defining synchronization signal block (CD-SSB).

Optionally, in Case 3, before the terminal device preforms re-establishment to the fourth BWP, the terminal device sends a re-establishment message to the network device, the re-establishment message indicates that the reason for the re-establishment is missing of system information.

It should be noted that if the terminal device receives the second indication information sent by the network device before the terminal device triggers the switch from the first BWP to the second BWP, in response to the second indication information, the terminal device receives the new system information on the first BWP, or the terminal device receives the new system information on the second BWP.

Therefore, in the present application, when the terminal device triggers a BWP switch, the terminal device may receive the new system information on the first BWP on which resides before the switch, or the second BWP on which resides after the switch, thereby ensuring that the terminal device can also update the system information during the BWP switch.

FIG. 6 is a schematic flowchart of a system information updating 300 according to the present application. The method 300 may be applied to the system shown in FIG. 1, but is not limited thereto. The method 300 includes at least part of the following content.

S310: The network device sends the first indication information to the terminal device, where the first indication information is configured for triggering the terminal device to switch from the first BWP to the second BWP.

Optionally, the first indication information is RRC signaling or downlink control information.

Optionally, the first indication information includes configuration information of an inactivity timer for the first BWP, and/or indication information indicating the terminal device to switch from the first BWP to the second BWP.

S320: The network device sends the new system information on the first BWP, or the network device sends the new system information on the second BWP.

Optionally, the system information includes MIB, RMSI, and SIBx.

The network device sends the new system information to the terminal device on the first BWP includes:
if the inactivity timer of the first BWP expires when the terminal device is receiving the new system information, the network device sends the new system information to the terminal device on the first BWP after the inactivity timer is started or restarted by the terminal device.

Optionally, the network device sends the new system information to the terminal device on the second BWP includes:
the network device sends the new system information to the terminal device on a third BWP, where the third BWP is a BWP with system information to which the terminal device automatically switches after the terminal device switches to the second BWP without system information according to the first indication information.

Optionally, the third BWP is the first BWP or the initial BWP.

Optionally, the network device sends the new system information to the terminal device on the second BWP includes:
the network device receives the first information sent by the terminal device, where the first information indicates that the terminal device does not have the new system information, or indicates that the terminal device does not have the complete new system information;
the network device sends the new system information to the terminal device on the second BWP in response to the first information.

Optionally, the first information is one of RRC signaling, MAC CE, and PUCCH signaling.

Optionally, the network device sends the new system information to the terminal device on the second BWP includes:
the network device sends the new system information to the terminal device on the second BWP through a dedicated signaling or a broadcast message.

Optionally, the network device sends the new system information to the terminal device on the second BWP includes:
the network device receives the re-establishment message sent by the terminal device, where the re-establishment message indicates that the reason for the re-establishment is missing of system information;
the network device sends the new system information to the terminal device on the fourth BWP, and the fourth BWP is a BWP with system information to which the terminal device performs the re-establishment.

Optionally, the network device receives the re-establishment message sent by the terminal device includes:
if the new system information is essential system information, the network device receives the re-establishment message sent by the terminal device.

Optionally, before the network device sends the first indication information to the terminal device, the method further includes:
the network device sends the second indication information to the terminal device, where the second indication information is configured for indicating the terminal device to update the system information.

Optionally, the second indication information is paging information or downlink control information.

It should be understood that, for the steps in the system information updating method 300 may be referred to the corresponding steps in the system information updating method 200. For brevity, details are not described herein.

Therefore, in the embodiment of the present application, when the terminal device triggers the BWP switch, the network device may send the new system information on the first BWP where the terminal device resides before the switch, or on the second BWP where the terminal device resides after the switch, so that it can be ensured that the terminal device may also update the system information during the BWP switch.

FIG. 7 is a schematic block diagram of a terminal device 400 according to the present application. As shown in FIG. 7, the terminal device 400 includes:
the processing unit 410, configured to trigger a switch from a first BWP to a second BWP;
the communication unit 420, configured to receive the new system information on the first BWP, or receive the new system information on the second BWP.

Optionally, the processing unit 410 is specifically configured to:
trigger the switch from the first BWP to the second BWP if an inactivity timer for the first BWP expires.

Optionally, the processing unit 410 is specifically configured to:
control the communication unit to receive the first indication information sent by the network device, where the first indication information is configured for indicating the terminal device to switch from the first BWP to the second BWP;
trigger the switch from the first BWP to the second BWP according to the first indication information.

Optionally, the first indication information is RRC signaling or downlink control information.

Optionally, the communication unit 420 is specifically configured to:
switch from the first BWP to the second BWP after the new system information is received on the first BWP.

Optionally, the communication unit 420 is specifically configured to:
trigger the processing unit to start or restart the inactivity timer if the inactivity timer of the first BWP expires when receiving the new system information, and receive the new system information on the first BWP.

Optionally, the communication unit 420 is specifically configured to:
if there is no system information on the second BWP after the terminal device switches from the first BWP to the second BWP, trigger the processing unit to control the terminal device to automatically switch from the second BWP to a third BWP with system information, and receive the new system information on the third BWP.

Optionally, the third BWP is the first BWP or the initial BWP.

Optionally, the communication unit 420 is specifically configured to:
receive the new system information sent by the network device through a dedicated signaling or a broadcast messages on the second BWP.

Optionally, before the communication unit 420 receives the new system information sent by the network device through the dedicated signaling or the broadcast message on the second BWP, the communication unit 420 is also configured to:
send first information to the network device, where the first information indicates that the terminal device does not have the new system information, or that the terminal device does not have the complete new system information.

Optionally, the communication unit 420 is specifically configured to:
send the first information to the network device before the terminal device switches to the second BWP according to the first indication information; or
send the first information to the network device after the terminal device switches to the second BWP according to the first indication information.

Optionally, the first information is one of RRC signaling, MAC CE, and PUCCH signaling.

Optionally, the communication unit 420 is specifically configured to:
if there is no system information on the second BWP after the terminal device switches from the first BWP to the second BWP, trigger the processing unit to control the terminal device to perform re-establishment to a fourth BWP with system information, and receive the new system information on the fourth BWP.

Optionally, the processing unit 410 is specifically configured to:
control the terminal device 400 to be reconstructed to the fourth BWP if the new system information is the essential system information.

Optionally, before the processing unit 410 controls the terminal device to re-establish to the fourth BWP, the communication unit 420 is further configured to:
send a re-establishment message to the network device, where the re-establishment message indicates that the reason for the re-establishment is missing of system information.

Optionally, before the processing unit 410 triggers the switch from the first BWP to the second BWP, the communication unit 420 is further configured to:
receive the second indication information sent by the network device on the first BWP, where the second indication information is configured for indicating the terminal device to update the system information;
receive the new system information on the first BWP, or receive the new system information on the second BWP in response to the second indication information.

Optionally, the second indication information is paging information or downlink control information.

Optionally, the system information includes MIB, RMSI, and SIBx.

It should be understood that the above and other operations and/or functions of each module in the terminal device 400 according to embodiments of the present application are respectively for implementing the corresponding processes of the terminal device in the method 200 in FIG. 5, and for brevity, details are not described herein.

FIG. 8 is a schematic block diagram of a network device 500 according to the present application. As shown in FIG. 8, the network device 500 includes:
a communication unit 510, configured to send the first indication information to the terminal device, where the first indication information is configured for triggering the terminal device to switch from the first BWP to the second BWP;
the communication unit 510 is further configured to send the new system information on the first BWP, or send the new system information on the second BWP.

Optionally, the first indication information includes the configuration information of an inactivity timer for the first BWP, and/or the indication information indicating the terminal device to switch from the first BWP to the second BWP.

Optionally, the communication unit 510 is specifically configured to:
send the new system information to the terminal device on the first BWP after the inactivity timer is started or restarted by the terminal device if the inactivity timer for the first BWP expires when the terminal device is receiving new system information.

Optionally, the communication unit 510 is specifically configured to:
send the new system information to the terminal device on the third BWP, where the third BWP is a BWP with system information to which the terminal device automatically switches after the terminal device switches to the second BWP without system information according to the first indication information.

Optionally, the third BWP is the first BWP or the initial BWP.

Optionally, the communication unit 510 is specifically configured to:
receive the first information sent by the terminal device, where the first information indicates that the terminal device does not have the new system information, or indicating that the terminal device does not have the complete new system information;
send the new system information to the terminal device on the second BWP in response to the first information.

Optionally, the first information is one of RRC signaling, MAC CE, and PUCCH signaling.

Optionally, the communication unit 510 is specifically configured to:
send the new system information to the terminal device on the second BWP through the dedicated signaling or the broadcast message.

Optionally, the communication unit 510 is specifically configured to:
receive a re-establishment message sent by the terminal device, where the re-establishment message indicates that the reason of the re-establishment is missing of system information;
send the new system information to the terminal device on the fourth BWP, where the fourth BWP is a BWP with system information to which the terminal device performs the re-establishment.

Optionally, the communication unit 510 is specifically configured to:
receive the re-establishment message sent by the terminal device if the new system information is essential new system.

Optionally, before the communication unit 510 sends the first indication information to the terminal device, the communication unit is also configured to send the second indication information to the terminal device, where the second indication information is configured for indicating the terminal device to update the system information.

Optionally, the second indication information is paging information or downlink control information.

Optionally, the first indication information is RRC signaling or downlink control information.

Optionally, the system information includes MIB, RMSI, and SIBx.

It should be understood that the above and other operations and/or functions of each module in the network device 500 according to embodiments of the present application are respectively for implementing the corresponding processes of the network device in the method 300 in FIG. 6, and for brevity, details are not described herein.

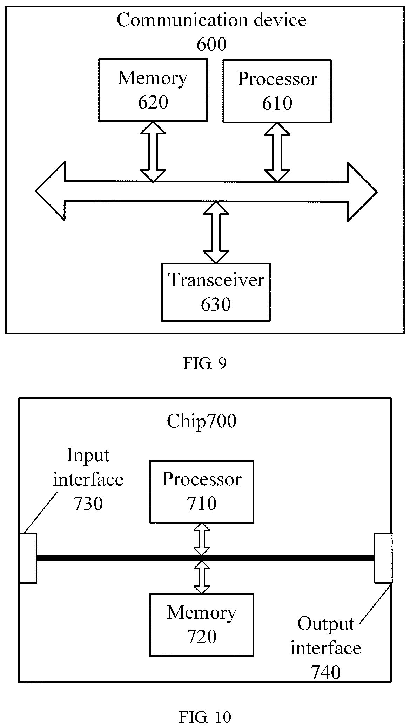

FIG. 9 is a schematic block diagram of a communication device 600 according to the present application. The communication device 600 shown in FIG. 9 includes a processor 610, and the processor 610 may call and run a computer program from the memory to implement the method in embodiments of the present application.

Optionally, as shown in FIG. 9, the communication device 600 may further include a memory 620. The processor 610 may call and run a computer program from the memory 620 to implement the method in embodiments of the present application.

The memory 620 may be a separate device independent of the processor 610, or may be integrated in the processor 610.

Optionally, as shown in FIG. 9, the communication device 600 may further include a transceiver 630, and the processor 610 may control the transceiver 630 to communicate with other devices, specifically, may send information or data to other devices, or receive information or data sent by other devices.

Among others, the transceiver 630 may include a transmitter and a receiver. The transceiver 630 may further include antennas, and the number of antennas may be one or more.

Optionally, the communication device 600 may be the network device of examples of the present application, and the communication device 600 may implement the corresponding process implemented by the network device in each method of examples of the present application. For brevity, details are not described herein.

Optionally, the communication device 600 may be the terminal device of examples of the present application, and the communication device 600 may implement the corresponding process implemented by the terminal device in each method of the example of the present application. For brevity, details are not described herein.

FIG. 10 is a schematic block diagram of a chip 700 according to the present application. The chip 700 shown in FIG. 10 includes a processor 710, and the processor 710 may call and run a computer program from the memory to implement the method in embodiments of the present application.

Optionally, as shown in FIG. 10, the chip 700 may further include a memory 720. The processor 710 may call and run a computer program from the memory 720 to implement the method in embodiments of the present application.

The memory 720 may be a separate device independent of the processor 710, or may be integrated in the processor 710.

Optionally, the chip 700 may further include an input interface 730. The processor 710 may control the input interface 730 to communicate with other devices or chips. Specifically, it may obtain information or data sent by other devices or chips.

Optionally, the chip 700 may further include an output interface 740. The processor 710 can control the output interface 740 to communicate with other devices or chips. Specifically, it may output information or data to other devices or chips.

Optionally, the chip may be applied to the network device in embodiments of the present application, and the chip may implement the corresponding process implemented by the network device in each method of embodiments of the present application. For brevity, details are not described herein.

Optionally, the chip may be applied to the terminal device in embodiments of the present application, and the chip may implement the corresponding process implemented by the terminal device in each method of embodiments of the present application. For brevity, details are not described herein.

It should be understood that the chips mentioned in embodiments of the present application may also be referred to as system-level chips, system chips, chip systems, or system-on-chip chips.

The processors mentioned above may be a general-purpose processor, a digital signal processor (DSP), a field programmable gate array (FPGA), an application specific integrated circuit (ASIC), or other programmable logic devices, transistor logic devices, discrete hardware components, etc. Where, the above-mentioned general-purpose processors may be a microprocessor or any conventional processor and the like.

The above-mentioned memories may be a volatile memory or a non-volatile memory, or may include both volatile and non-volatile memory. Where, the non-volatile memories may be a read-only memory (ROM), a programmable ROM (PROM), an erasable PROM (EPROM), an electrically EPROM (EEPROM) or flash memory. The volatile memory may be a random access memory (random access memory, RAM).

It should be understood that the foregoing memory is exemplary but not limiting, for example, the memories in examples of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DR RAM), etc. That is to say, the memories in examples of the present application are intended to include but are not limited to these and any other suitable types of memories.

FIG. 11 is a schematic block diagram of a wireless communication system 800 according to the present application. As shown in FIG. 11, the wireless communicatior system 800 includes a terminal device 810 and a network device 820. The terminal device 810 is configured to trigger a switch from a first BWP to a second BWP; receive the new system information on the first BWP, or receive the new system information on the second BWP. The network device 820 is configured to send the first indication information to the terminal device, where the first indication information is configured for triggering the terminal device to switch from the first BWP to the second BWP; send the new system information on the first BWP, or, send the new system information on the second BWP.

Among others, the terminal device 810 may be configured to implement the corresponding functions implemented by the terminal device in the above method 200, and the composition of the terminal device 810 may be as the same as the terminal device 400 shown in FIG. 7. For brevity, details are not described herein.

The network device 820 may be configured to implement the corresponding functions implemented by the network device in the above method 300, and the composition of the network device 820 may be as the same as the network device 500 shown in FIG. 8. For brevity, details are not described herein.

In the above embodiments, it can be implemented in whole or in part by software, hardware, firmware, or any combination thereof. When implemented by using software, it can be implemented in whole or in part in the form of a computer program product. The computer program product includes one or more computer instructions. When the computer program instructions are loaded and executed on the computer, all or part of the processes or functions described in embodiments of the present application are generated. The computer may be a general-purpose computer, a dedicated computer, a computer network, or other programmable devices. The computer instructions may be stored in a computer-readable storage medium, or transmitted from one computer-readable storage medium to another computer-readable storage medium, for example, the computer instructions may be from a website site, computer, server or data center via wired (e.g., coaxial cable, optical fiber, digital subscriber line (DSL)) or wireless (e.g., infrared, wireless, microwave, etc.) to another website, computer, server or data center. The computer-readable storage medium may be any available medium that can be accessed by a computer or data storage devices of integrated servers, data centers and the like that includes one or more available medium. The available medium may be a magnetic medium (e.g., a floppy disk, a hard disk, a magnetic tape), an optical medium (e.g., a DVD), or a semiconductor medium (e.g., a solid state disk (SSD)).

It should be understood that in various embodiments of the present application, the numerical size of the sequence numbers of the above processes does not mean the order of execution, and the execution order of each process should be determined by its function and inherent logic, and there should be no limitation to the implementation processes applied to embodiments of the present application.

Persons skilled in the art can clearly understand that for the convenience and conciseness of the description, the specific working process of the system, device and unit described above can refer to the corresponding process in the foregoing method embodiments, which will not be repeated herein.

The above is only the specific implementation of the present application, but the scope of protection of this application is not limited to this, and persons skilled in the art may easily think of changes or substitutions within the technical scope disclosed in the present application, which should all fall within the protection scope of the present application. Therefore, the protection scope of the present application shall be subject to the protection scope of the claims.

## Claims

1. A system information updating method (200), comprising:
triggering (S210), by a terminal device, a switch from a first bandwidth part, BWP, to a second BWP; and
receiving (S220), by the terminal device, new system information on the first BWP, wherein the first BWP is in an activated state;
wherein receiving (S220), by the terminal device, the new system information on the first BWP comprises:
if the inactivity timer for the first BWP expires when the terminal device is receiving the new system information, starting or restarting, by the terminal device, the inactivity timer, and receiving the new system information on the first BWP.

2. The method (200) according to claim 1, wherein triggering (S210), by the terminal device, the switch from the first BWP to the second BWP comprises:
if an inactivity timer for the first BWP expires, triggering, by the terminal device, the switch from the first BWP to the second BWP.

3. The method (200) according to claim 1, wherein triggering (S210), by the terminal device, the switch from the first BWP to the second BWP comprises:
receiving, by the terminal device, first indication information sent by a network device, wherein the first indication information is configured for indicating the terminal device to switch from the first BWP to the second BWP; and
triggering, by the terminal device, according to the first indication information, the switch from the first BWP to the second BWP.

4. The method (200) according to any one of claims 1 to 3, wherein receiving (S220), by the terminal device, the new system information on the first BWP comprises:
after the new system information is received on the first BWP, switching, by the terminal device, from the first BWP to the second BWP.

5. The method (200) according to any one of claims 1 to 4, wherein before triggering (S210), by the terminal device, the switch from the first BWP to the second BWP, the method further comprises:
receiving, by the terminal device, second indication information sent by a network device on the first BWP, wherein the second indication information is configured for indicating the terminal device to update system information;
receiving, by the terminal device, the new system information on the first BWP, or receiving, by the terminal device, the new system information on the second BWP comprises:
in response to the second indication information, receiving, by the terminal device, the new system information on the first BWP.

6. The method (200) according to claim 5, wherein the second indication information is paging information or downlink control information.

7. The method (200) according to any one of claims 1 to 6, wherein the system information comprises a master information block MIB, a remaining system information RMSI, and other system information blocks SIBx.

8. A wireless communication system (800), comprising: a terminal device (810) and a network device (820), wherein,
the terminal device (810) is configured to trigger a switch from a first bandwidth part BWP to a second BWP; receive new system information on the first BWP, wherein the first BWP is in an activated state;
the network device (820) is configured to send first indication information to the terminal device (810), wherein the first indication information is configured for triggering the terminal device (810) to switch from the first bandwidth part BWP to the second BWP; send new system information on the first BWP;
wherein the terminal device (810) is specially configured to:
if the inactivity timer for the first BWP expires when the terminal device (810) is receiving the new system information, start or restart the inactivity timer, and receive the new system information on the first BWP.

9. The system (800) according to claim 8, wherein the first indication information comprises configuration information of an inactivity timer for the first BWP, and/or indication information indicating the terminal device (810) to switch from the first BWP to the second BWP.

10. The system (800) according to claim 8 or 9, wherein the network device (820) is further configured to:
send second indication information to the terminal device (810), wherein the second indication information is configured for indicating the terminal device (810) to update system information.

11. The system (800) according to claim 10, wherein the second indication information is paging information or downlink control information.

12. The system (800) according to any one of claims 8 to 11, wherein the first indication information is RRC signaling or downlink control information.

13. The system (800) according to any one of claims 8 to 12, wherein the system information comprises a master information block MIB, a remaining system information RMSI, and other system information blocks SIBx.

14. A terminal device (400), **characterized by** executing the system information updating method (200) according to any one of claims 1 to 7.

## Patentansprüche

1. Verfahren zum Aktualisieren von Systeminformationen (200), Folgendes umfassend:
Auslösen (S210) eines Umschaltens von einem ersten Bandbreitenteil, BWP - Bandwidth Part, zu einem zweiten BWP durch ein Endgerät und
Empfangen (S220) neuer Systeminformationen durch das Endgerät auf dem ersten BWP, wobei sich der erste BWP in einem aktivierten Zustand befindet,
wobei das Empfangen (S220) der neuen Systeminformationen durch das Endgerät auf dem ersten BWP Folgendes umfasst:
falls der Inaktivitäts-Timer für den ersten BWP abläuft, wenn das Endgerät gerade die neuen Systeminformationen empfängt, Starten oder Neustarten des Inaktivitäts-Timers durch das Endgerät und Empfangen der neuen Systeminformationen auf dem ersten BWP.

2. Verfahren (200) nach Anspruch 1, wobei das Auslösen (S210) des Umschaltens von dem ersten BWP zu einem zweiten BWP durch das Endgerät Folgendes umfasst:
falls ein Inaktivitäts-Timer für den ersten BWP abläuft, Auslösen des Umschaltens von dem ersten BWP zu dem zweiten BWP durch das Endgerät.

3. Verfahren (200) nach Anspruch 1, wobei das Auslösen (S210) des Umschaltens von dem ersten BWP zu einem zweiten BWP durch das Endgerät Folgendes umfasst:
Empfangen erster Angabeinformationen, die durch eine Netzwerkvorrichtung gesendet werden, durch das Endgerät, wobei die ersten Angabeinformationen dafür konfiguriert sind, dem Endgerät anzugeben, von dem ersten BWP zu dem zweiten BWP umzuschalten, und
Auslösen des Umschaltens von dem ersten BWP zu dem zweiten BWP durch das Endgerät gemäß den ersten Angabeinformationen.

4. Verfahren (200) nach einem der Ansprüche 1 bis 3, wobei das Empfangen (S220) der neuen Systeminformationen durch das Endgerät auf dem ersten BWP Folgendes umfasst:
nachdem die neuen Systeminformationen auf dem ersten BWP empfangen wurden, Umschalten von dem ersten BWP zu dem zweiten BWP durch das Endgerät.

5. Verfahren (200) nach einem der Ansprüche 1 bis 4, wobei das Verfahren vor dem Auslösen (S210) des Umschaltens von dem ersten BWP zu dem zweiten BWP durch das Endgerät ferner Folgendes umfasst:
Empfangen zweiter Angabeinformationen, die von einer Netzwerkvorrichtung auf dem ersten BWP gesendet werden, durch das Endgerät, wobei die zweiten Angabeinformationen dafür konfiguriert sind, dem Endgerät anzugeben, die Systeminformationen zu aktualisieren,
wobei das Empfangen der neuen Systeminformationen auf dem ersten BWP durch das Endgerät oder das Empfangen der neuen Systeminformationen auf dem zweiten BWP durch das Endgerät Folgendes umfasst:
in Reaktion auf die zweiten Angabeinformationen Empfangen der neuen Systeminformationen durch das Endgerät auf dem ersten BWP.

6. Verfahren (200) nach Anspruch 5, wobei die zweiten Angabeinformationen Paging-Informationen oder Downlink-Steuerinformationen sind.

7. Verfahren (200) nach einem der Ansprüche 1 bis 6, wobei die Systeminformationen einen Master-Informationsblock, MIB, eine verbleibende Systeminformation, RMSI - Remaining System Information -, und andere Systeminformationsblöcke, SIBx, sind.

8. Drahtloses Kommunikationssystem (800), Folgendes umfassend: ein Endgerät (810) und eine Netzwerkvorrichtung (820), wobei
das Endgerät (810) dafür konfiguriert ist, ein Umschalten von einem ersten Bandbreitenteil, BWP - Bandwidth Part, zu einem zweiten BWP auszulösen, neue Systeminformationen auf dem ersten BWP zu empfangen, wobei sich der erste BWP in einem aktivierten Zustand befindet,
- die Netzwerkvorrichtung (820) dafür konfiguriert ist, erste Angabeinformationen an das Endgerät (810) zu senden, wobei die ersten Angabeinformationen dafür konfiguriert sind, das Endgerät (810) auszulösen, von dem ersten BWP zu dem zweiten BWP umzuschalten, neue Systeminformationen auf dem ersten BWP zu senden,
wobei das Endgerät (810) insbesondere für Folgendes konfiguriert ist:
falls der Inaktivitäts-Timer für den ersten BWP abläuft, wenn das Endgerät (810) gerade die neuen Systeminformationen empfängt, Starten oder Neustarten des Inaktivitäts-Timers und Empfangen der neuen Systeminformationen auf dem ersten BWP.

9. System (800) nach Anspruch 8, wobei die ersten Angabeinformationen Konfigurationsinformationen eines Inaktivitäts-Timers für den ersten BWP und/oder Angabeinformationen umfasst, die dem Endgerät (810) angeben, von dem ersten BWP zu dem zweiten BWP umzuschalten.

10. System (800) nach Anspruch 8 oder 9, wobei die Netzwerkvorrichtung (820) ferner für Folgendes konfiguriert ist:
Senden zweiter Angabeinformationen an das Endgerät (810), wobei die zweiten Angabeinformationen dafür vorgesehen sind, dem Endgerät (810) anzugeben, Systeminformationen zu aktualisieren.

11. System (800) nach Anspruch 10, wobei die zweiten Angabeinformationen Paging-Informationen oder Downlink-Steuerinformationen sind.

12. System (800) nach einem der Ansprüche 8 bis 11, wobei die ersten Angabeinformationen RRC-Signalisierungs- oder Downlink-Steuerinformationen sind.

13. System (800) nach einem der Ansprüche 8 bis 12, wobei die Systeminformationen einen Master-Informationsblock, MIB, eine verbleibende Systeminformation, RMSI - Remaining System Information -, und andere Systeminformationsblöcke, SIBx, sind.

14. Endgerät (400), **gekennzeichnet durch** Ausführen des Verfahrens zum Aktualisieren von Systeminformationen (200) nach einem der Ansprüche 1 bis 7.

## Revendications

1. Procédé de mise à jour d'informations système (200), comprenant :
le déclenchement (S210), par un dispositif terminal, d'une commutation d'une première partie de bande passante, BWP, sur une deuxième BWP ; et
la réception (S220), par le terminal, de nouvelles informations système sur la première BWP ; la première BWP étant dans un état activé ;
dans lequel la réception (S220), par le dispositif terminal, des nouvelles informations système sur la première BWP comprend :
si la minuterie d'inactivité de la première BWP expire lorsque le dispositif terminal reçoit les nouvelles informations système, la mise en marche ou la remise en marche, par le dispositif terminal, de la minuterie d'inactivité et la réception des nouvelles informations système sur la première BWP.

2. Procédé (200) selon la revendication 1, dans lequel le déclenchement (S210), par le dispositif terminal, de la commutation de la première BWP sur la seconde BWP comprend : si une minuterie d'inactivité pour la première BWP expire, le déclenchement, par le dispositif terminal, de la commutation de la première BWP sur la seconde BWP.

3. Procédé (200) selon la revendication 1, dans lequel le déclenchement (S210), par le dispositif terminal, de la commutation de la première BWP sur la seconde BWP comprend : la réception, par le dispositif terminal, de premières informations d'indication envoyées par un dispositif de réseau, les premières informations d'indication étant configurées pour indiquer au dispositif terminal de commuter de la première BWP sur la seconde BWP ; et
le déclenchement, par le terminal, en fonction des premières informations d'indication, de la commutation de la première BWP sur la seconde BWP.

4. Procédé (200) selon l'une quelconque des revendications 1 à 3, dans lequel la réception (S220), par le dispositif terminal, des nouvelles informations système sur la première BWP comprend :
après la réception des nouvelles informations système sur la première BWP, la commutation, par le dispositif terminal, de la première BWP sur la seconde BWP.

5. Procédé (200) selon l'une quelconque des revendications 1 à 4, le procédé comprenant en outre, avant le déclenchement (S210), par le dispositif terminal, de la commutation de la première BWP sur la seconde BWP :
la réception, par le terminal, de secondes informations d'indication envoyées par un dispositif de réseau sur la première BWP, les secondes informations d'indication étant configurées pour indiquer au dispositif terminal de mettre à jour des informations système ;
la réception, par le dispositif terminal, des nouvelles informations système sur la première BWP, ou la réception, par le dispositif terminal, des nouvelles informations système sur la seconde BWP comprend :
en réponse aux secondes informations d'indication, la réception, par le dispositif terminal, des nouvelles informations système sur la première BWP.

6. Procédé (200) selon la revendication 5, dans lequel les secondes informations d'indication sont des informations de radiomessagerie ou des informations de commande de liaison descendante.

7. Procédé (200) selon l'une quelconque des revendications 1 à 6, dans lequel les informations système comprennent un bloc d'informations maître MIB, des informations système restantes RMSI, et d'autres blocs d'informations système SIBx.

8. Système de communication sans fil (800), comprenant : un dispositif terminal (810) et un dispositif de réseau (820), dans lequel
le dispositif terminal (810) est configuré pour déclencher une commutation d'une première partie de bande passante BWP sur une seconde BWP ; recevoir de nouvelles informations système sur la première BWP, la première BWP étant dans un état activé ;
le dispositif de réseau (820) est configuré pour envoyer des premières informations d'indication au dispositif terminal (810), les premières informations d'indication étant configurées pour déclencher le terminal (810) afin de commuter de la première partie de bande passante BWP sur la seconde BWP ; envoyer de nouvelles informations système sur la première BWP ;
dans lequel le dispositif terminal (810) est spécialement configuré pour :
si la minuterie d'inactivité de la première BWP expire lorsque le terminal (810) reçoit les nouvelles informations système, mettre en marche ou remettre en marche la minuterie d'inactivité et recevoir les nouvelles informations système sur la première BWP.

9. Système (800) selon la revendication 8, dans lequel les premières informations d'indication comprennent des informations de configuration d'une minuterie d'inactivité pour la première BWP, et/ou des informations d'indication indiquant au dispositif terminal (810) de commuter de la première BWP sur la seconde BWP.

10. Système (800) selon la revendication 8 ou 9, dans lequel le dispositif de réseau (820) est en outre configuré pour :
envoyer des secondes informations d'indication au dispositif terminal (810), les secondes informations d'indication étant configurées pour indiquer au dispositif terminal (810) de mettre à jour des informations système.

11. Système (800) selon la revendication 10, dans lequel les secondes informations d'indication sont des informations de radiomessagerie ou des informations de commande de liaison descendante.

12. Système (800) selon l'une quelconque des revendications 8 à 11, dans lequel les premières informations d'indication sont des informations de signalisation RRC ou des informations de commande de liaison descendante.

13. Système (800) selon l'une quelconque des revendications 8 à 12, dans lequel les informations système comprennent un bloc d'informations maître MIB, des informations système restantes RMSI et d'autres blocs d'informations système SIBx.

14. Dispositif terminal (400), **caractérisé par** l'exécution du procédé de mise à jour d'informations système (200) selon l'une quelconque des revendications 1 à 7.
